# EUROPEAN PATENT APPLICATION

(11) **EP 2 180 256 A2**
(43) Date of publication of application: **28.04.2010**
(21) Application number: 09173358.4
(22) Date of filing: 16.10.2009
(51) Int. Cl.: F23R 3/06, F23R 3/00, F23R 3/60

(54) **Dual wall structure for use in a combustor of a gas turbine engine**

(30) Priority: 22.10.2008 US 256246
(71) Applicant: Honeywell International, Inc., Morristown NJ 07962 (US)
(72) Inventor: Rudrapatna, Nagaraja S., Morristown, NJ 07962-2245 (US); Kettinger, Jon, Morristown, NJ 07962-2245 (US)
(74) Representative: Buckley, Guy Julian

(57) **Abstract**

A dual wall structure for a combustor of a gas turbine engine including an inner liner and an outer liner coupled to a combustor dome and defining a combustion chamber there between. Each of the inner liner and the outer liner include an outer wall and an inner wall. Each of the outer walls includes a plurality of impingement holes formed therein for allowing a coolant to flow therethrough. Each of the inner walls is coupled to the outer wall and a combustor dome and includes a plurality of heat shield panels. Each of the plurality of heat shield panels extends a longitudinal length of the combustor chamber and includes a plurality of side rails, an aft rail and a forward flange that when coupled to the outer wall defines a single cavity there between. A plurality of cavities being formed by the plurality of heat shield panels.

## Description

### TECHNICAL FIELD

The present invention relates to gas turbine engine combustors and, more particularly, to a wall structure for a gas turbine engine combustor.

### BACKGROUND

A gas turbine engine may be used to power various types of vehicles and systems. A particular type of gas turbine engine that may be used to power aircraft is a turbofan gas turbine engine. A turbofan gas turbine engine may include, for example, five major sections, a fan section, a compressor section, a combustor section, a turbine section, and an exhaust section. The fan section is positioned at the front, or "inlet" section of the engine, and includes a fan that induces air from the surrounding environment into the engine, and accelerates a fraction of this air toward the compressor section. The remaining fraction of air induced into the fan section is accelerated into and through a bypass plenum, and out the exhaust section.

The compressor section raises the pressure of the air it receives from the fan section to a relatively high level. The compressed air from the compressor section then enters the combustor section, where a ring of fuel nozzles injects a steady stream of fuel into a combustor. The injected fuel is ignited by a burner, which significantly increases the energy of the compressed air.

The high-energy compressed air from the combustor section then flows into and through the turbine section, causing rotationally mounted turbine blades to rotate and generate energy. The air exiting the turbine section is exhausted from the engine via the exhaust section, and the energy remaining in this exhaust air aids the thrust generated by the air flowing through the bypass plenum.

The exhaust air exiting the engine may include varying levels of one or more pollutants. For example, the exhaust air may include, at varying levels, certain oxides of nitrogen (NOₓ), carbon monoxide (CO), unburned hydrocarbons (UHC), and smoke. In recent years, environmental concerns have placed an increased emphasis on reducing these, and other, exhaust gas emissions from gas turbine engines. In some instances, emission-based landing fees are imposed on aircraft that do not meet certain emission standards. As a result, engine ownership and operational costs can increase. One means of addressing the emission issue is by reduction of the unwanted emissions from within the combustor section. During operation, the combustion process that takes place in the combustor section results in the combustor walls being exposed to extremely high temperatures. In order to reduce unwanted emissions, more air is needed for cooling within the combustor section. Typically, the amount of air coming from the compressor section of a gas turbine engine is fixed for a given thermodynamic cycle. This means that there is less air available for cooling of the combustor walls. The reduction in cooling air for the combustor typically results in higher metal temperatures. Combustors with single wall annular construction suffer from hoop stress effects. The high metal temperature due to less cooling air coupled with high hoop stress due to monolithic construction of combustors results in premature failures and reduced durability.

To overcome the deficiencies often realized in single wall combustion engines, it is known to construct combustor engines with a dual wall configuration. More particularly, it is known to construct combustor engines including an outer wall and an inner wall to increase the cooling effects of the combustor walls. Typically, in a dual wall configuration, the inner wall includes a plurality of cooling tiles or heat shields. In one particular example, the inner and outer walls may include a plurality of openings providing for the flow of a cooling air from external the combustion chamber to internal the combustion chamber. In another particular example, a mixing port may be included and provide for the fluidic flow to the interior of the combustion chamber. Although the use of this mixing scheme is effective to some extent, the column of air as it enters the combustion chamber may be disturbed by the effusion film layer formed on the inner wall.

Accordingly, there is a need for a superior combustor design that incorporates improved mechanical arrangement and efficient cooling techniques. In addition, there is a need for a gas turbine engine that can operate with reduced levels of exhaust gas emissions and/or that can reduce the likelihood of an owner being charged an emission-based landing fee and/or can reduce ownership and operational costs.

### BRIEF SUMMARY

The present invention provides a dual wall structure for a combustor of a gas turbine engine and a combustor for a gas turbine engine that includes the dual wall structure.

In one embodiment, and by way of example only, there is provided a dual wall structure for a combustor of a gas turbine engine including a combustor dome, an outer liner coupled to said combustor dome, and an inner liner coupled to said combustor dome and spaced a distance from said outer liner. Each of said outer liner and said inner liner comprise an outer wall including a plurality of impingement holes formed therein for allowing a coolant to flow therethrough and an inner wall coupled to said outer wall and the combustor dome. The inner wall comprises a plurality of heat shield panels, each having a hot side and a cold side. The cold side includes a plurality of side rails, an aft rail and a forward angled flange that when coupled to the outer wall define a cavity there between. A plurality of cavities are formed by the plurality of heat shield panels. Each of said plurality of heat shield panels extends a longitudinal length of said combustor and includes a plurality of effusion holes for allowing said coolant to flow from said cold side to said hot side and form a cooling film on a surface of said hot side.

In another exemplary embodiment, and by way of example only, there is provided a dual wall structure for a combustor of a gas turbine engine including a combustor dome; an outer liner coupled to said combustor dome; and an inner liner coupled to said combustor dome and spaced a distance from said outer liner, wherein each of said outer liner and said inner liner comprise: an outer wall including a plurality of impingement holes formed therein for allowing a coolant to flow therethrough; and an inner wall coupled to said outer wall and the combustor dome, said inner wall comprising a plurality of heat shield panels, each having a hot side and a cold side. Each of the plurality of heat shield panels further comprises a plurality of side rails and an aft rail extending substantially perpendicular from a surface of the cold side and a forward angled flange. The plurality of side rails, the aft rail and the forward angled flange defining a cavity between the inner wall and the outer wall when coupled together. A plurality of cavities are formed by the plurality of heat shield panels. Each of said plurality of heat shield panels further comprises a plurality of integral threaded studs extending substantially perpendicular from the surface of the cold side and through a plurality of holes defined in the outer wall. The plurality of integral threaded studs provide a means for coupling each of the plurality of heat shield panels to the outer wall. Each of said plurality of heat shield panels extends a longitudinal length of said combustor and includes a plurality of effusion holes for allowing said coolant to flow from said cold side to said hot side and form a cooling film on a surface of said hot side.

In yet another exemplary embodiment, and by way of example only, there is provided a combustor for a gas turbine engine including a combustor dome, an outer liner and an inner liner coupled to the combustor dome, wherein said inner liner and said outer liner define a combustion chamber there between. The engine further includes an outer wall and a plurality of heat shield panels comprising a portion of each of said outer liner and said inner liner. Each of the plurality of heat shield panels extends substantially a longitudinal length of said combustion chamber. Each of said plurality of heat shield panels includes a hot side and a cold side. The cold sides each include a plurality of side rails, an aft rail and a forward angled flange that when coupled to the outer wall of each of the outer liner and the inner liner defines a cavity between each of the plurality of heat shield panels and the outer wall. A plurality of cavities are formed by the plurality of heat shield panels.

Other independent features and advantages of the dual wall structure for a combustor of a gas turbine engine and a combustor for a gas turbine engine incorporating the dual wall structure will become apparent from the following detailed description, taken in conjunction with the accompanying drawings which illustrate, by way of example, the principles of the invention.

### BRIEF DESCRIPTION OF THE DRAWINGS

The present invention will hereinafter be described in conjunction with the following drawing figure, wherein:

FIG. 1 is a simplified, cross-sectional view of a gas turbine engine, according to an embodiment

FIG. 2 is a partial, cross-sectional view of the combustor section of FIG. 1 including a dual wall structure according to an embodiment;

FIG. 3 is a partial three-dimensional view of a dual wall structure combustor according to an embodiment;

FIG. 4 is a three-dimensional view of a heat shield panel of FIG. 3 according to an embodiment;

FIG. 5 is a three-dimensional view of a portion of the heat shield panel of FIG. 4; and

FIG. 6 is a three-dimensional view of a portion of the dual wall structure combustor of FIG. 2 according to an embodiment.

### DETAILED DESCRIPTION

Before proceeding with the description, it is to be appreciated that the following detailed description is merely exemplary in nature and is not intended to limit the invention or the application and uses of the invention. Furthermore, there is no intention to be bound by any theory presented in the preceding background or the following detailed description.

The embodiment disclosed herein is described in sufficient detail to enable those skilled in the art to practice the invention, and it is to be understood that other embodiments may be utilized and that logical mechanical changes may be made without departing from the scope of the present invention. Furthermore, it will be understood by one of skilled in the art that although the specific embodiment illustrated below is directed at a combustor of a gas turbine engine in an aircraft, for purposes of explanation, the apparatus may be used in various other embodiments employing combustors typically found in gas turbine engines. The following detailed description is, therefore, not to be taken in a limiting sense.

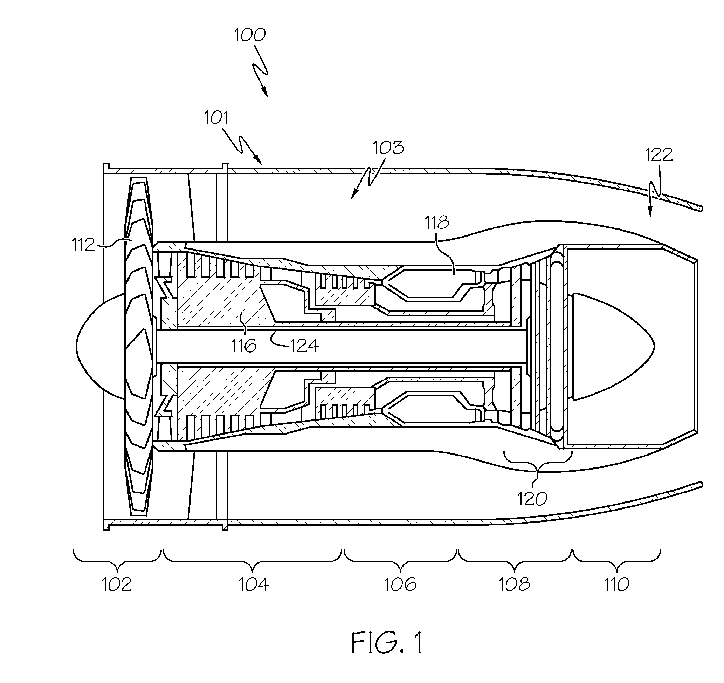

FIG. 1 is a simplified, cross-sectional view of a gas turbine engine 100, according to an embodiment. The engine 100 may be disposed in an engine case 101 and may include a fan section 102, a compressor section 104, a combustion section 106, a turbine section 108, and an exhaust section 110. The fan section 102 may include a fan 112, which draws air into the fan section 102 and accelerates it. A fraction of the accelerated air exhausted from the fan 112 is directed through a bypass section 103 to provide a forward thrust. The remaining fraction of air exhausted from the fan 112 is directed into the compressor section 104.

The compressor section 104 may include a series of compressors 116, which raise the pressure of the air directed into it from the fan 112. The compressors 116 may direct the compressed air into the combustion section 106. In the combustion section 106, which includes an annular combustor 118, the high pressure air is mixed with fuel and combusted. The combusted air is then directed into the turbine section 108.

The turbine section 108 may include a series of turbines 120, which may be disposed in axial flow series. The combusted air from the combustion section 106 expands through the turbines 120, causing them to rotate. The air is then exhausted through a propulsion nozzle 122 disposed in the exhaust section 110, providing additional forward thrust. In an embodiment, the turbines 120 rotate to thereby drive equipment in the engine 100 via concentrically disposed shafts or spools. Specifically, the turbines 120 may drive the compressor 116 via one or more rotors 124.

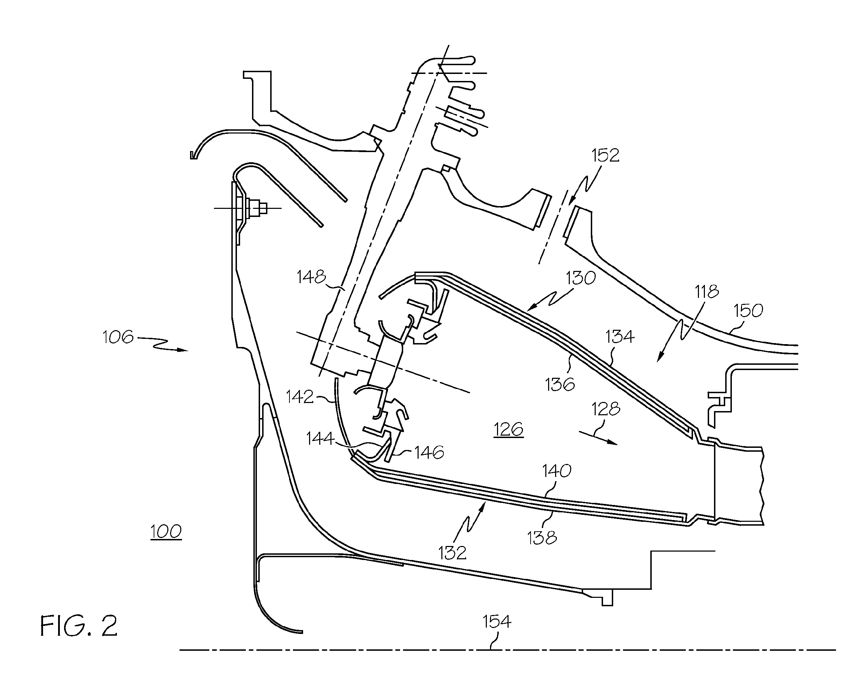

Turning now to FIG. 2, illustrated is a portion of the gas turbine engine 100, and more particularly a portion of the combustion section 106 including the annular combustor 118. The annular combustor 118 is conventionally configured with an outer liner 130 and an inner liner 132, defining a combustion chamber 126 there between. The combustor airflow through the combustion chamber 126 is designated by a directional arrow 128. Each of the outer liner 130 and the inner liner 132 are defined by an outer wall and an inner wall. More specifically, the outer liner 130 is comprised of an outer wall 134 and an inner wall 136. The inner liner 132 is comprised of an outer wall 138 and an inner wall 140. The combustion section 106 further includes a dome shroud 142, a dome 144 and a dome heat shield 146. A fuel nozzle 148 is coupled to a combustor case 150, which further includes an igniter hole 152 formed therein. In FIG. 2, only half the structure is shown, it being substantially rotationally symmetric about a centerline and axis of rotation 154.

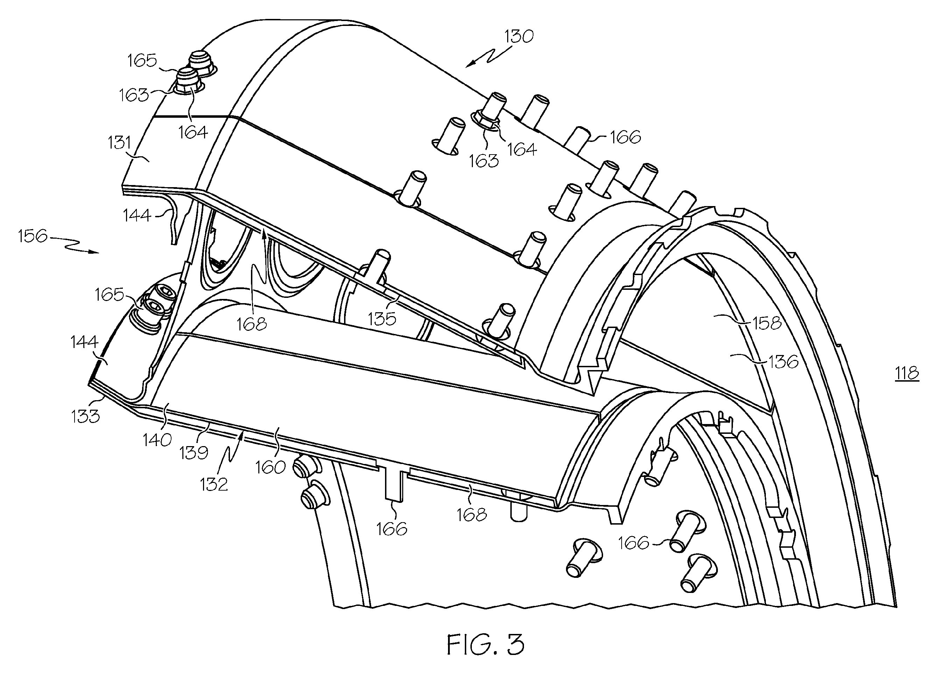

Referring now to FIG. 3, illustrated is a partial cut-away three-dimensional view of a portion of the annular combustor 118. More specifically, illustrated are the outer liner 130 and the inner liner 132 coupled together at a forward end 156 of the combustion chamber 126 via the dome 144 (FIG. 2). Each of the outer liner 130 and the inner liner 132, and more particularly the components that comprise the outer liner 130 and the inner liner 132, are formed to include an angled flange 131 and 133, respectively, at the forward end 156 of the combustion chamber 126.

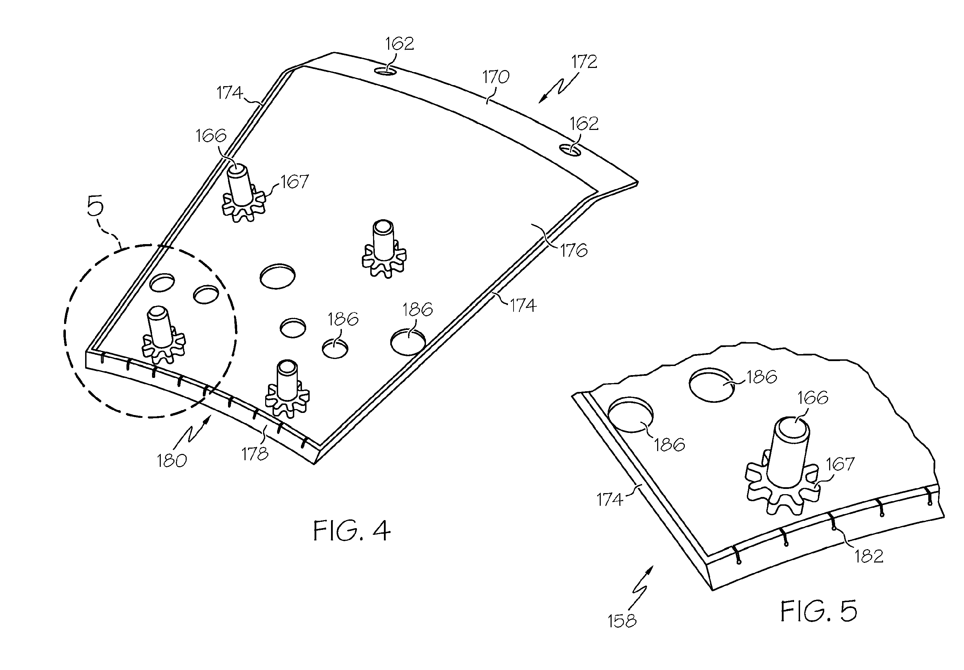

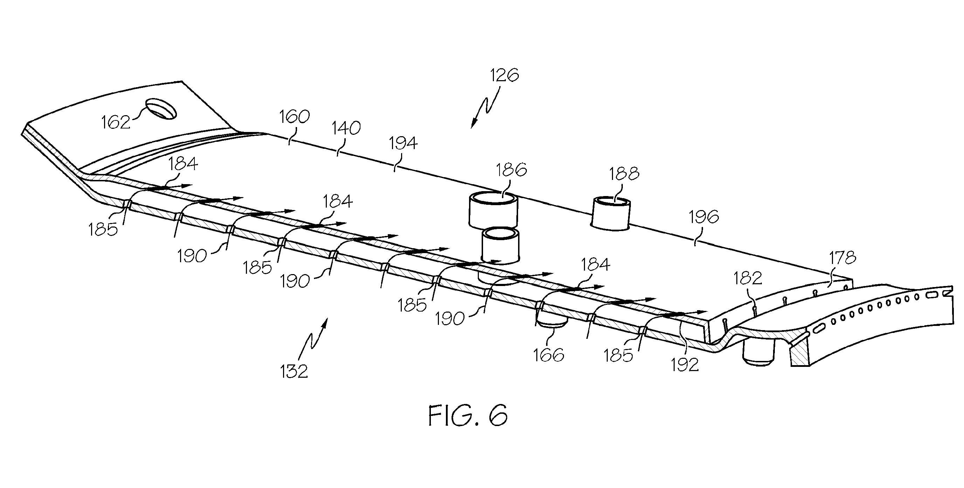

In a preferred embodiment, each of the outer walls 134 and 138 of the outer liner 130 and inner liner 132, respectively, are formed of a continuous sheet of material, such as a metal. Each of the inner walls 136 and 140 of each liner 130,132 are comprised of a plurality of heat shield panels that provide heat shielding of the outer walls 134 and 138. As best illustrated in FIG. 3, the inner wall 136 is comprised of a plurality of discrete heat shield panels 158, each being cast as a single piece of material, that essentially line a hot side 135 of the outer wall 134 of the outer liner 130. In an alternative embodiment, the plurality of discrete heat shield panels may be machined out of a plate metal, a bar stock of metal, or the like. Similarly, the inner wall 140 is comprised of a plurality of heat shield panels 160 that essentially line a hot side 139 of the outer wall 138 of the inner liner 132. Each of the pluralities of heat shield panels 158, 160 are coupled to their respective outer wall 134, 138 at the forward end 156 of the combustion chamber 126 via a bore 162 (FIGs. 4 and 6) formed in a portion of the dome 144, the outer walls 134 and 138 and the inner walls 136 and 140 and a securing means, such as a washer 163, a nut 164, and a bolt 165. In addition, the plurality of heat shield panels 158, 160 are bolted to their respective outer walls 134 and 138, via a plurality of integral threaded studs 166 (described presently) with each of the plurality of threaded studs 166 being secured with a washer 163 and a nut 164, or similar securement means. As best illustrated by the heat shield panels 160, each of the plurality of heat shield panels 158, 160 extends substantially the overall longitudinal length of the combustion chamber 126 and defines a cavity 168 between the heat shield panels 158, 160 and its respective outer wall 134, 138, to which it is coupled.

Referring now to FIGs. 4 and 5, illustrated is a single heat shield panel 158 and an enlarged inset of the heat shield panel 158, as indicated in FIG. 4. It should be understood that while only a single heat shield panel is illustrated and described with respect to FIGS. 4-5, the heat shield panel 158 is representative of the plurality of heat shield panels 158 and 160 that comprise the inner walls 136 and 140. The heat shield panel 158 is formed as a generally curvilinear component, with a slight concave shape to allow for definition of the combustion chamber 126. Alternatively, each of the plurality of heat shield panels 160 (FIG. 3) may have a slight convex shape to allow for definition of the combustion chamber. As previously stated, the heat shield panel 158 extends substantially the longitudinal length of the annular combustor 118. The heat shield panel 158 includes an angled flange 170 at a forward end 172 of the heat shield panel 158. A plurality of side rails 174 extend substantially perpendicular to an interior surface 176 of the heat shield panel 158. In addition, an aft rail 178 extends substantially perpendicular to the interior surface 176 at an aft end 180 of the heat shield panel 158. In combination, the plurality of side rails 174 and the aft rail 178 form a rail about three sides of the heat shield panel 158. The angled flange 170, the plurality of side rails 174 and the aft rail 178 in combination define the cavity 168 (FIG. 3) between the outer wall 134 (FIG. 3) and the inner wall 136, and more particularly the heat shield panel 158, when coupled together. More particularly, when the heat shield panel 158 is coupled to the outer wall 134, the plurality of side rails 174 and the aft rail 178 are in sealing contact with the outer wall 134 and the angled flange 170 is sandwiched between the angled flange 131 of the outer wall 134 and the dome 144 and in sealing engagement therewith. To provide for coupling, the heat shield panel 158 includes the plurality of the integral threaded studs 166, of which in this preferred embodiment four (4) are illustrated. In the illustrated embodiment, each of the threaded studs 166 includes a star-shaped platform 167 on the interior surface 176 of the heat shield panel 158 to provide for increased surface area and additional heat transfer capabilities, as well as providing a strong mechanical platform during coupling of the plurality of heat shield panels 158 to the outer wall 134. In an alternative embodiment, the platform may have an overall geometry that lends itself to providing a strong mechanical support to the threaded stud 166.

The aft rail 178 is configured to include a plurality of controlled openings 182 formed therein. In one preferred embodiment, the plurality of controlled openings 182 may be formed as slots in the aft rail 178. The plurality of controlled openings 182 provide a means for purging the cavity 168, and more particularly, provide a means for air to flow out of the cavity 168 and aid in the initiating and augmenting of a cooling air film. In alternate embodiments, the controlled openings may be formed as substantially circular openings, or similar type configurations that would provide for the passage of a cooling air from within the cavity 168.

Referring now to FIG. 6, illustrated is a portion of the inner liner 132, showing a portion of the outer wall 138 and the inner wall 140. An impingement-effusion cooling scheme is used to control the temperature of the metal material that forms the annular combustor 118 of FIG. 2. To this effect, a plurality of effusion holes 184 are formed penetrating through the inner wall 140, and more particularly the heat shield panel 160. A plurality of impingement holes 185 are formed penetrating through the outer wall 138. In addition, a plurality of aligned dilution holes 186 (also see FIG. 4) are formed penetrating through the outer wall 138 and the inner wall 140, and more particularly, through the heat shield panel 160. It is anticipated that the plurality of dilution holes 186 may be formed in rows and of varying diameters as best illustrated in FIG. 4. In this particular embodiment, each of the plurality of dilution holes 186 includes a brazed insert 188 extending between the outer wall 138 and inner wall 140, and into the combustion chamber 126 to permit the flow of air therethrough the inner liner 132. In an alternate embodiment, each of the plurality of dilution holes 186 may include an insert for the purpose of directing air through the plurality of dilution holes 186 that is press-fit, tack welded, or affixed by some similar means to the outer wall 138 and the inner wall 140. The inserts 188 allow for the flow of air entering the combustion chamber 126 to remain undisturbed by a film a cooling air 194 that is formed on the inner wall 140.

During cooling, a cooling air flow 190 enters through the plurality of impingement holes 185 and impinges upon a cool side surface 192 of the inner wall 140, and more particularly, the heat shield panel 160. The cooling air flow 190 then flows through the plurality of effusion holes 184 formed in the inner wall 140, and more particularly the heat shield panel 160, to form the film of cooling air 194 on a hot side surface 196 of the inner wall 140, or heat shield panel 160. In addition, cooling air flow 190 flows through the plurality of controlled openings 182 formed in the aft rail 178 and aids in augmenting the film of cooling air 194. The plurality of dilution holes 186, provide for the flow of a coolant, such as air, through the outer wall 138 and inner wall 140, and into the combustion chamber 126. The impingement cooling process with its higher heat transfer capability in conjunction with the film of cooling air 194 formed due to effusion cooling on the heat shield panel 160 results in significant reduction in metal temperatures. The heat shield panel 160 is a discrete component and therefore does not suffer from hoop stress effects experienced in prior art combustors having annular wall configurations.

Accordingly, disclosed is a dual wall structure for a combustor of a turbine engine that provides for cooling of the combustor and accordingly the reduction of emissions. The disclosed method includes heat shield panels that extend substantially the longitudinal length of the combustion chamber, with each heat shield panel including three rails and an angled flange that when coupled to an outer wall form a sealed cavity with the outer wall.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A dual wall structure for a combustor (118) of a gas turbine engine comprising:
a combustor dome (144);
an outer liner (130) coupled to said combustor dome (144); and
an inner liner (132) coupled to said combustor dome (144) and spaced a distance from said outer liner (130), wherein each of said outer liner (130) and said inner liner (132) comprise:
an outer wall (134) including a plurality of impingement holes (185) formed therein for allowing a coolant to flow therethrough; and
an inner wall (136) coupled to said outer wall (134) and the combustor dome (144), said inner wall (136) comprising a plurality of heat shield panels (158, 160), each having a hot side (135) and a cold side, said cold side having a plurality of side rails (174), an aft rail (178) and a forward angled flange (170) that when coupled to the outer wall (134) define a cavity there between, a plurality of cavities (168) formed by the plurality of heat shield panels (158, 160);
wherein each of said plurality of heat shield panels (158, 160) extends a longitudinal length of said combustor (118);
wherein each of said plurality of heat shield panels (158, 160) includes a plurality of effusion holes (184) for allowing said coolant to flow from said cold side to said hot side (135) and form a cooling film on a surface of said hot side (135).

2. A dual wall structure for a combustor (118) as claimed in Claim 1, further including a plurality of integral threaded studs (166) including a platform formed adjacent the surface of the cold side of each of the plurality of heat shield panels (158, 160) and configured to provide mechanical support, the plurality of integral threaded studs (166) extending substantially perpendicular from a surface of the cold side of each of the plurality of heat shield panels (158, 160).

3. A dual wall structure for a combustor (118) as claimed in Claim 2, wherein the platform is a substantially star-shaped platform (167)

4. A dual wall structure for a combustor (118) as claimed in Claim 2, wherein each of the plurality of integral threaded studs (166) extends through an opening formed in the outer wall (134, 138), thereby providing a means for coupling of each of the plurality of heat shield panels (158, 160) to the outer wall (134, 138).

5. A dual wall structure for a combustor (118) as claimed in Claim 1, wherein the aft rail (178) includes a plurality of controlled openings (182) formed therein, the plurality of controlled openings (182) providing fluidic communication between each of the plurality of cavities (168) and the surface of the hot side (135) of each of the heat shield panels (158, 160).

6. A dual wall structure for a combustor (118) as claimed in Claim 1, wherein said forward angled flange (170, 131) of each of said plurality of heat shield panels (158, 160) is sandwiched between the combustor dome (144) and the outer wall (134), thereby providing at least a portion of a seal for the cavity (168) defined between each of the plurality of heat shield panels (158, 160) and the outer wall (134).

7. A dual wall structure for a combustor (118) as claimed in Claim 1, further including a plurality of vertically aligned dilution holes (186) formed in said outer wall (138) and each of said plurality of heat shield panels (158, 160).

8. A dual wall structure for a combustor (118) as claimed in Claim 7, wherein each of said plurality of vertically aligned dilution holes (186) includes one of a brazed insert (188), a tack welded insert or a press-fit insert.
